# DEMANDE DE BREVET EUROPEEN

(11) **EP 0 619 561 A1**
(43) Date de publication de la demande: **12.10.1994**
(21) Numéro de dépôt: 94105132.8
(22) Date de dépôt: 31.03.1994
(51) Int. Cl.: G06K 7/08, G06K 7/10

(54) **Circuit d'interface ayant deux bornes d'entrée et permettant conjointement d'alimenter un circuit d'application et de communiquer avec ce dernier**

(30) Priorité: 08.04.1993 FR 9304357
(71) Demandeur: CSEM, Centre Suisse d'Electronique et de Microtechnique S.A., CH-2007 Neuchâtel (CH)
(72) Inventeur: Lamothe, Christian, CH-2000 Neuchâtel (CH); Perotto, Jean-Félix, CH-2013 Colombier (CH)
(74) Mandataire: de Montmollin, Henri

(57) **Abrégé**

La présente invention concerne un circuit d'interface (50) destiné à être relié d'une part à un bus bifilaire (58,60) et d'autre part à un circuit d'application (66).

Le circuit d'interface (50) comprend un pont redresseur double-alternance (D1,D2,D3,D4) servant à l'alimentation du circuit d'application (66) conjointement avec une capacité d'alimentation (68). Selon un mode de réalisation préféré de l'invention, le circuit d'interface comprend en outre un premier interrupteur (70) et un deuxième interrupteur (72) servant à définir une tension constamment déterminée entre un point de référence externe (54) et un point de référence interne (62) au circuit d'application.

## Description

La présente invention concerne un circuit d'interface entre un système combiné d'alimentation et de communication et un circuit d'application, ce circuit d'interface ayant deux bornes d'entrée et permettant conjointement d'alimenter le circuit d'application et de communiquer avec ce dernier.

Il est connu du document US 4 864 292 le dispositif représenté à la figure 1. Ce dispositif comprend un pont redresseur 2 à quatre diodes. Les deux bornes d'entrée 4 et 6 du pont redresseur 2 sont reliées à un bus bifilaire comprenant un premier fil 8 et un deuxième fil 9. Ce bus bifilaire est relié à une bobine 10. Les deux sorties 12 et 14 du pont redresseur 2 sont reliées à un circuit d'application 16. Une capacité d'alimentation 18 est prévue entre les deux bornes de sortie 12 et 14. Les deux bornes d'entrée 4 et 6 du pont redresseur 2 sont également reliées aux deux bornes 21 et 22 d'un interrupteur 24 actionnées par le circuit d'application 16. Une résistance 26 est susceptible d'être prévue sur le chemin électrique reliant l'interrupteur 24 aux deux bornes d'entrée 4 et 6 du pont redresseur 2.

Ce dispositif forme un système d'identification permettant à une unité de contrôle (non-représentée) de lire une information mémorisée dans le circuit d'application 16. Pour ce faire, l'unité de contrôle transmet au pont redresseur 2 un courant électrique alternatif par le moyen de la bobine 10. Le pont redresseur 2 redresse la tension alternative de manière à alimenter la capacité d'alimentation 18, laquelle fournit au circuit d'application 16 une tension de polarité constante d'une amplitude sensiblement constante. Ensuite, le circuit d'application 16 actionne l'interrupteur 24 de manière à former une succession de courts-circuits, ce qui a pour effet d'augmenter l'intensité du courant électrique circulant dans la bobine 10. L'unité de contrôle est à même de détecter la succession de courts-circuits et de l'interpréter comme un signal formé d'éléments d'information binaire permettant à cette unité de contrôle de lire l'information mémorisée dans le circuit d'application 16.

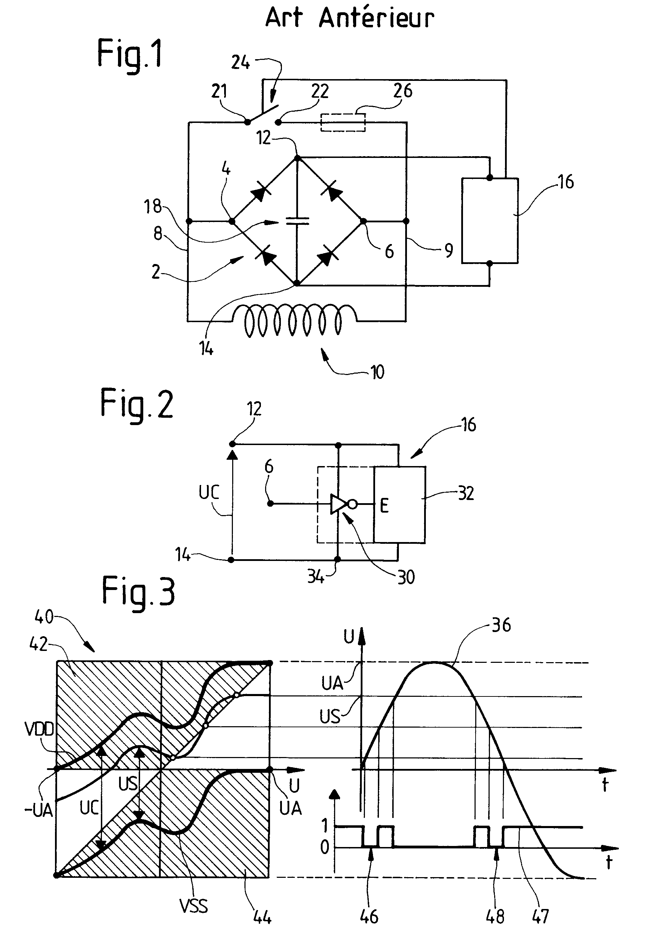

Les figures 2 et 3 montrent que le dispositif de la figure 1 n'est pas approprié comme tel pour fournir au circuit d'application 16 une information fiable au moyen du bus bifilaire 8, 9. On notera ici que le dispositif complémentaire de la figure 2 n'est pas envisagé dans le document US 4 864 292. Ce dispositif complémentaire sert uniquement à montrer la limite d'utilisation d'un dispositif tel que représenté à la figure 1 et en particulier lorsqu'un tel dispositif est également utilisé pour entrer des informations dans le circuit d'application 16.

Sur la figure 2 sont représentées la borne d'entrée 6 et les deux bornes de sortie 12 et 14 du dispositif de la figure 1, ainsi que le circuit d'application 16. Ce dernier comprend un inverseur 30. L'inverseur 30 est alimenté par la tension d'alimentation fournie par la capacité 18 de la figure 1. L'entrée de l'inverseur 30 est reliée à la borne d'entrée 6 et la sortie de cet inverseur 30 est reliée à une entrée E d'une unité de traitement 32 comprise dans le circuit d'application 16.

L'inverseur 30 permet d'extraire d'un signal alternatif, entrant par le moyen de la bobine 10, une information binaire. De manière classique, l'inverseur définit un "1" logique lorsque la tension entre la borne de référence 34 et la borne d'entrée 6 est en-dessous d'une certaine tension de seuil US et un "0" logique lorsque la tension entre cette borne de référence 34 et la borne d'entrée 6 est supérieure à cette tension de seuil US.

Grâce à l'inverseur 30, une unité (non-représentée) susceptible de communiquer avec le circuit d'application 16 par le moyen de la bobine 10 peut envoyer, lors d'une phase d'entrée d'information dans le circuit d'application 16, un signal électrique présentant une succession de valeurs de tension entre les deux bornes d'entrée 4 et 6. Ces valeurs de tension sont soit au-dessus de la tension de seuil US, soit au-dessous de cette tension de seuil US suivant qu'il est prévu de transmettre soit un "0" logique, soit un "1" logique.

Cependant, le système combiné résultant des figures 1 et 2 est inapproprié pour permettre une entrée d'information dans le circuit d'application 16 de manière fiable comme le montre la figure 3.

Sur cette figure 3 est représenté un signal électrique d'entrée 36 de forme sinusoïdale dont la tension U correspond à la tension résultante entre les bornes d'entrée 4 et 6. La tension U du signal électrique d'entrée 36 varie entre une tension maximum UA et une tension minimum -UA. En se plaçant dans le cas idéal d'une consommation quasi nulle du circuit d'application 16, la valeur de la tension UA correspond à la valeur de la tension d'alimentation UC fournie par la capacité 18.

Sur la figure 3, la tension VDD représente la tension à la borne de sortie 12 alors que la tension VSS représente la tension à la borne de sortie 14. Le diagramme 40 de la figure 3 montre que, lorsque la tension du signal électrique d'entrée 36 est située entre les deux tensions extrêmes UA et -UA, les niveaux de tension VSS et VDD sont flottants. De ce fait, la différence de tension entre la borne de référence 34 de l'inverseur 30 et la borne d'entrée 6 fluctue de manière incontrôlée avec comme seule condition que le niveau de la tension VDD est situé dans une première zone hachurée 42 et le niveau de la tension VSS est situé dans une deuxième zone hachurée 44. Ceci a pour effet d'engendrer des impulsions parasites 46 et 48 dans l'information binaire 47 reçue par l'unité de traitement 32. Ces impulsions parasites 46 et 48 sont des plus néfastes pour le fonctionnement du circuit d'application 16.

L'invention a pour but de remédier aux inconvénients décrits ci-avant en fournissant un circuit d'interface permettant d'alimenter un circuit d'application via deux bornes d'entrée sans que le niveau de tension d'alimentation du circuit d'application soit flottant.

A cet effet, l'invention concerne un circuit d'interface, destiné à être relié électriquement d'une part à un bus bifilaire et d'autre part à un circuit d'application, comprenant un pont redresseur double-alternance ayant une première borne d'entrée, une seconde borne d'entrée, une première borne de sortie et une seconde borne de sortie, lesdites première et seconde bornes d'entrée étant destinées à être reliées respectivement à un premier fil et à un second fil dudit bus bifilaire, ce dernier étant susceptible de conduire un signal électrique d'alimentation ayant une tension d'entrée définie entre lesdites première et deuxième bornes d'entrée, une desdites première et seconde bornes d'entrée définissant un point de référence externe, lesdites première et seconde bornes de sortie étant destinées à être reliées audit circuit d'application, une capacité d'alimentation dudit circuit d'application étant prévue entre ces première et seconde bornes de sortie, cette capacité d'alimentation ayant entre lesdites première et seconde bornes de sortie une tension d'alimentation de polarité constante, une desdites première et seconde bornes de sortie définissant un point de référence interne, ledit circuit d'application comprenant des moyens de lecture d'une information en tension transmise à ce circuit d'application par un signal électrique de communication, lesdits moyens de lecture étant alimentés en tension par ladite tension d'alimentation et ledit signal électrique de communication ayant une tension déterminée relativement audit point de référence externe, ledit circuit d'interface étant caractérisé en ce qu'il comprend des moyens pour définir une tension au moins quasi constamment déterminée entre ledit point de référence externe et ledit point de référence interne.

Selon un mode de réalisation particulier du circuit d'interface selon l'invention, ce dernier est caractérisé en ce que la première borne de sortie définit un pôle négatif de la tension d'alimentation et en ce que lesdits moyens pour définir une tension au moins quasi constamment déterminée entre ledit point de référence externe et ledit point de référence interne comprennent un premier interrupteur et un second interrupteur, ledit premier interrupteur étant situé entre ladite première borne d'entrée et ladite première borne de sortie dudit pont redresseur, ledit second interrupteur étant situé entre ladite seconde borne d'entrée et ladite première borne de sortie de ce pont redresseur, ledit premier interrupteur étant conducteur seulement lorsque la polarité de la tension d'entrée est positive, le second interrupteur étant conducteur seulement lorsque la polarité de ladite tension d'entrée est négative.

Il résulte de ces caractéristiques un circuit d'interface agencé de manière à relier électriquement une des première et seconde bornes d'entrée avec la première borne de sortie, quelle que soit la tension entre ces première et seconde bornes d'entrée, sans perturber le fonctionnement du pont redresseur.

Ainsi, il est possible d'alimenter le circuit d'application sous une tension de polarité constante et d'amplitude sensiblement constante au moyen d'un signal électrique d'alimentation, ayant une amplitude de tension variable et transmis via un bus bifilaire au circuit d'interface de l'invention, tout en assurant une relation en tension constamment déterminée entre un point de référence externe associé audit signal électrique d'alimentation entrant et un point de référence interne défini à l'intérieur du circuit d'application.

Il résulte encore des caractéristiques du circuit d'interface selon l'invention décrit ci-avant que toutes les entrées et sorties du circuit d'application ayant une relation en tension déterminée avec le point de référence externe ont également une relation en tension déterminée avec le point de référence interne du circuit d'application. Ainsi, tout échange d'information, basé sur la tension d'un signal électrique de communication, est parfaitement défini à l'intérieur du circuit d'application tout comme dans un système de communication environnant et en particulier dans le bus bifilaire.

De ce fait, les moyens de lecture du circuit d'interface mentionnés ci-avant peuvent recevoir une information en tension, transmise par le signal électrique de communication, parfaitement déterminée.

Dans un mode de réalisation préféré de l'invention, le signal électrique d'alimentation et le signal électrique de communication forment un seul et même signal électrique d'entrée transmis par le bus bifilaire.

D'autres caractéristiques et avantages de l'invention ressortiront encore mieux à la lecture de la description suivante, faite en référence aux dessins annexés donnés à titre nullement limitatif et sur lesquels :
- la figure 1, déjà décrite, représente un dispositif d'alimentation d'un circuit d'application compris dans l'art antérieur;
- la figure 2, déjà décrite, représente un dispositif combinable au dispositif de la figure 1 permettant au circuit d'application de lire une information binaire déduite du signal électrique servant à l'alimentation du circuit d'application;
- la figure 3, déjà décrite, montre schématiquement un comportement possible de la tension d'alimentation des dispositifs combinés des figures 1 et 2 relativement à la tension d'un signal d'entrée de forme sinusoïdale et l'information binaire reçue par le circuit d'application en fonction de ce signal d'entrée;

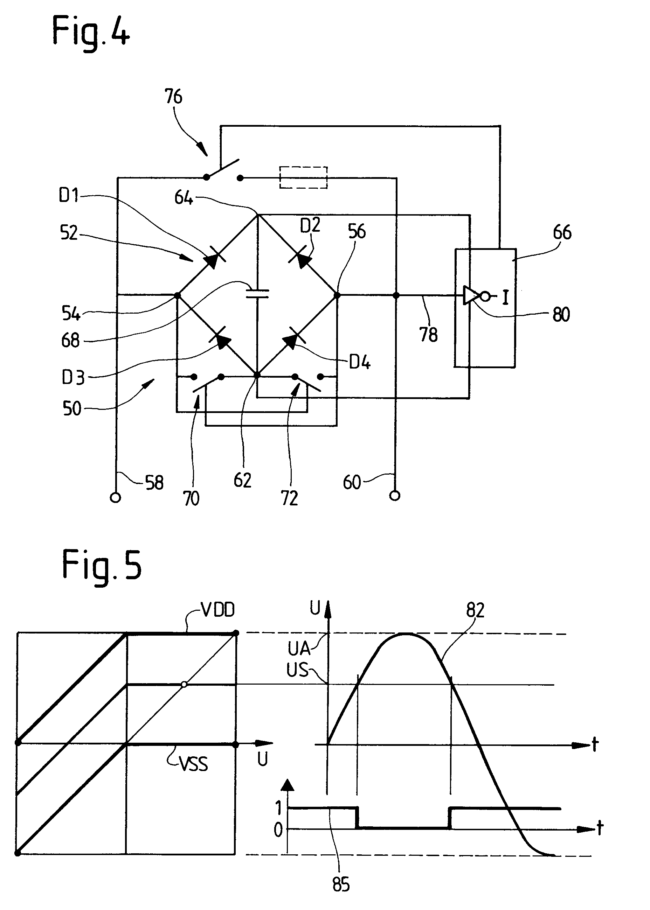

- la figure 4 représente schématiquement un mode général de réalisation d'un circuit d'interface selon l'invention;
- la figure 5 montre schématiquement le comportement de la tension d'alimentation fournie par le circuit d'interface de la figure 4 à un circuit d'application en fonction de la tension d'un signal d'entrée et une information binaire fournie au circuit d'application par un inverseur ayant son entrée reliée à l'un des deux fils d'un bus bifilaire conduisant le signal d'entrée;

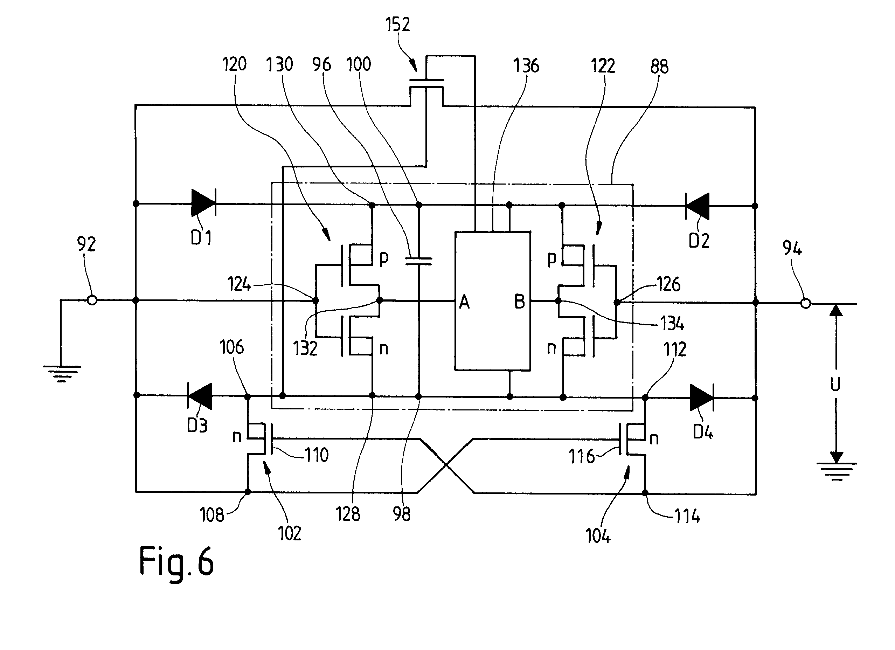

- la figure 6 représente schématiquement un système comprenant un circuit d'interface selon l'invention et un circuit d'application;

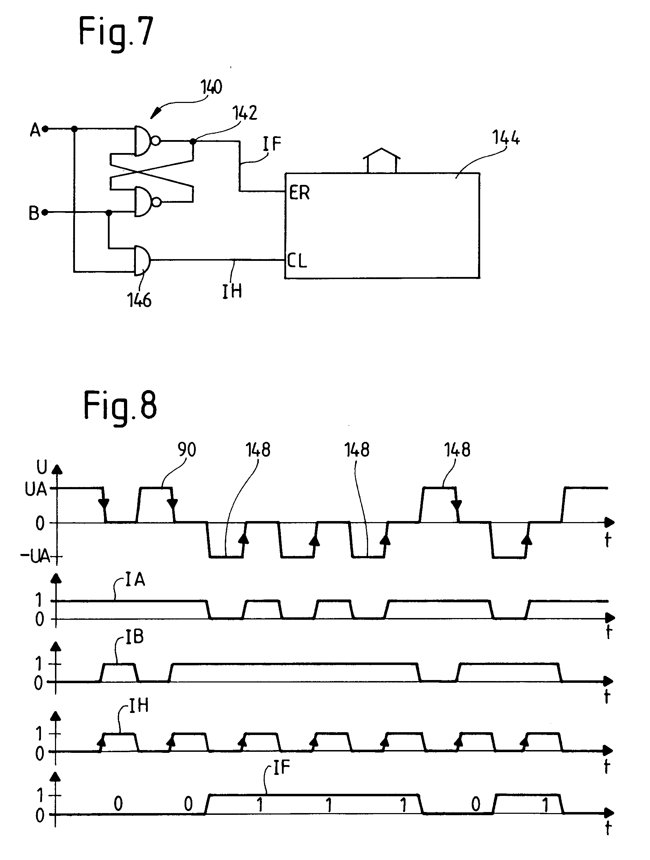

- la figure 7 représente schématiquement un dispositif de traitement de signaux d'information compris dans le circuit d'application du système représenté à la figure 6;
- la figure 8 montre schématiquement des informations, constituées de divers éléments binaires, déduites d'un signal électrique d'entrée et un signal d'horloge interne au circuit d'application extrait du signal d'entrée dans le cas du système représenté aux figures 6 et 7.

Sur la figure 4 est représenté un circuit d'interface 50 comprenant un pont redresseur 52 à double-alternance formé par quatre diodes D1, D2, D3 et D4. Les deux bornes d'entrée 54 et 56 du pont redresseur 52 sont reliées respectivement aux deux fils 58 et 60 d'un bus bifilaire. Les deux bornes de sortie 62 et 64 du pont redresseur 52 sont reliées à un circuit d'application 66. Entre les deux bornes de sortie 62 et 64 est prévue une capacité d'alimentation 68 servant à alimenter le circuit d'application 66 sous une tension de polarité constante présentant une amplitude de tension sensiblement constante. De manière arbitraire, on choisit la borne d'entrée 54 comme point de référence externe du circuit d'interface 50 et la borne de sortie 62 comme point de référence interne de ce circuit d'interface 50 et du circuit d'application 66.

Ensuite, le circuit d'interface 50 comprend un premier interrupteur 70 et un second interrupteur 72. Le premier interrupteur 70 relie la borne d'entrée 54 à la borne de sortie 62 alors que l'interrupteur 72 relie cette borne de sortie 62 à la borne d'entrée 56.

On notera que la borne de sortie 62, définissant le point de référence interne, constitue le pôle négatif de la tension d'alimentation fournie par la capacité d'alimentation 68 au circuit d'application 66.

Le premier interrupteur 70 est actionnée par la borne d'entrée 56 alors que le second interrupteur 72 est actionné par la borne d'entrée 54. L'actionnement de l'un et de l'autre des deux interrupteurs 70 et 72 est gouverné par le niveau de tension de la borne d'entrée respective 54 et 56.

L'actionnement des interrupteurs 70 et 72 est agencé de telle manière que lorsque le pôle d'entrée 56 a un niveau de tension supérieur au pôle d'entrée 54, le premier interrupteur 70 est conducteur et le second interrupteur 72 est non-conducteur. Par conducteur, il est compris ici que l'interrupteur présente une faible résistance alors que dans le cas où il est non-conducteur, il présente une forte résistance au courant électrique. De manière similaire, lorsque le niveau de tension de la borne d'entrée 54 est supérieur au niveau de tension de la borne d'entrée 56, le premier interrupteur 70 est non-conducteur et le second interrupteur 72 est conducteur.

Il résulte de l'agencement décrit ci-dessus que la borne de sortie 62, définissant dans le cas de la figure 4 le pôle négatif de la tension d'alimentation, est constamment reliée électriquement soit au pôle d'entrée 56, soit au pôle d'entrée 54. De ce fait, quel que soit le niveau de tension entre les deux bornes d'entrée 54 et 56 d'un signal électrique entrant, le point de référence interne défini par la borne de sortie 62 présente constamment une relation en tension déterminée avec l'une des deux bornes d'entrée 54 et 56 et donc avec le point de référence externe. L'agencement des deux interrupteurs 70 et 72 assure donc une parfaite détermination du niveau de tension du point de référence interne 62 du circuit d'application 66 relativement à un point de référence externe d'une unité de communication (non-représentée) communiquant avec ce circuit d'application 66 via le bus bifilaire 58, 60.

Le circuit d'interface représenté sur la figure 4 présente l'avantage de garantir une alimentation électrique en continu du circuit d'application 66 et de permettre une communication avec ce circuit d'application 66 en lecture et en écriture via un seul et même bus bifilaire 58, 60.

En mode lecture, il est prévu d'utiliser l'interrupteur 76 situé entre les deux bornes d'entrée 54 et 56. Cet interrupteur 76 est actionné par le circuit d'application 66. Lorsque l'interrupteur est conducteur, le bus bifilaire 58, 60 est court-circuité et un courant de plus forte intensité est engendré dans ce bus bifilaire. Ainsi, l'intensité du courant fourni par une unité de communication (non-représentée) dans le bus bifilaire 58, 60 varie suivant que l'interrupteur 76 est conducteur ou non. Si cette unité de communication comprend des moyens capables de détecter une variation d'intensité du courant électrique engendré dans le bus bifilaire 58, 60, il est alors possible d'interpréter l'ouverture et la fermeture du transistor 76 comme une information comprenant un certain nombres d'éléments binaires transmis en série.

En mode d'écriture, l'unité de communication engendre dans le bus bifilaire 58, 60 un signal électrique transmis au circuit d'application 66 au moyen d'au moins un fil de connexion 78. Afin de transformer un signal électrique entrant par le bus bifilaire en une information binaire, la borne d'entrée 56 est reliée à titre d'exemple à l'entrée d'un inverseur 80 compris dans le circuit d'application 66.

En se référant ci-après à la figure 5, on décrira le comportement de la tension d'alimentation fournie par le circuit d'interface 50 de la figure 4 au circuit d'application 66 en fonction de la tension U d'un signal électrique d'entrée 82 mesurée entre les bornes d'entrée 54 et 56. Sur cette figure 5 est également représentée une information binaire 85, résultante du signal électrique d'entrée 82 de forme sinusoïdale, telle que reçue par le circuit d'application 66 à la sortie I de l'inverseur 80 représenté sur la figure 4.

Sur cette figure 5 est encore représenté le niveau de tension VSS de la borne de sortie 62 et le niveau de tension VDD de la borne de sortie 64 en fonction de la tension U engendrée entre les deux bornes d'entrée 54 et 56 par le signal d'entrée 82. On notera que le signal d'entrée 82 présente une tension variant entre une valeur maximale UA et une valeur minimale -UA.

La tension de seuil US de l'inverseur 80 du circuit d'application 66 détermine de manière univoque le niveau du signal binaire 85 engendré à la sortie de cet inverseur 80 en fonction du signal d'entrée 82. En effet, lorsque la valeur de la tension U du signal d'entrée 82 est située en-dessous du cette tension de seuil US, l'information binaire 85 est dans l'état logique "1" et lorsque la tension U de ce signal d'entrée 82 est située au-dessus de la tension de seuil US, l'information binaire 85 est dans un état logique "0". Il apparaît ainsi de manière claire un avantage essentiel résultant du circuit d'interface 50 de la figure 4 en comparant les diagrammes de la figure 5 et les diagrammes correspondants de la figure 3 sur laquelle est décrit un comportement possible de la tension d'alimentation des dispositifs combinés des figures 1 et 2 relativement à la tension d'un signal d'entrée analogue à celui de la figure 5.

A l'aide des figures 6 à 8, on décrira ci-après un système de communication via un bus bifilaire, ce système comportant un circuit d'interface selon l'invention servant à alimenter un circuit d'application 88 compris dans ce système de communication.

Le circuit d'interface de ce système de communication est formé de manière analogue à celui de la figure 4 et comprend un pont redresseur à quatre diodes D1, D2, D3 et D4 servant à redresser la tension d'un signal électrique d'entrée 90 présentant une tension d'entrée U définie entre une première borne d'entrée 92 et une seconde borne d'entrée 94, ce signal électrique d'entrée 90 étant transmis par un bus bifilaire (non-représenté) aboutissant sur ces première et seconde bornes d'entrée 92 et 94. On notera que le bus bifilaire peut par exemple être relié à une bobine permettant un couplage électromagnétique avec une unité de communication. Dans ce dernier cas, il est possible d'intégrer le bus bifilaire et la bobine dans le système de communication décrit ici. Sur cette figure 6, la première borne d'entrée 92 a été choisie comme point de référence externe. Ainsi, la tension U du signal d'entrée 90 correspond au niveau de tension que ce signal d'entrée 90 présente à la seconde borne d'entrée 94 relativement à la première borne d'entrée 92.

Une capacité d'alimentation 96 interne au circuit d'application 88 est située entre une première borne de sortie 98 et une seconde borne de sortie 100 du pont redresseur à quatre diodes D1, D2, D3 et D4. Cette capacité 96 sert à assurer en continu une tension d'alimentation de polarité constante et d'amplitude sensiblement constante au circuit d'application 88. La première borne de sortie 98 définit un point de référence interne pour l'ensemble du circuit d'application 88.

Le circuit d'interface comporte un premier transistor à enrichissement MOS 102 et un deuxième transistor à enrichissement MOS 104. Dans le présent cas, ces deux transistors 102 et 104 sont du type n-canal. La source 106 du premier transistor 102 est reliée à la première borne de sortie 98 alors que le drain 108 de ce transistor 102 est reliée à la première borne d'entrée 92. La grille 110 de ce premier transistor 102 est reliée à la seconde borne d'entrée 94. La source 112 du deuxième transistor 104 est reliée à la première borne de sortie 98, alors que le drain 114 de ce deuxième transistor 104 est reliée à la seconde borne d'entrée 94. La grille 116 de ce deuxième transistor 104 est reliée à la première borne d'entrée 92.

En prévoyant une tension de seuil des transistors 102 et 104 relativement proche de zéro, l'agencement de ces transistors 102 et 104 assure que la borne de sortie 98 est constamment reliée électriquement soit à la première borne d'entrée 92, soit à la seconde borne d'entrée 94. Lorsque la tension U du signal d'entrée 90 est positive, le transistor 102 est conducteur et lorsque cette tension U est négative, le transistor 104 est conducteur.

Dans le cas où la tension U est nulle, aucun des transistors 102 et 104 n'est conducteur. Cependant, le niveau de tension de la borne de sortie 98 est déterminé de manière univoque étant donné que si ce niveau de tension s'écarte de la valeur nulle, l'un des deux transistors 102 et 104 devient conducteur.

Dans le cas hypothétique d'une consommation quasi nulle du circuit d'application 88, le niveau de tension VSS de la première borne de sortie 98 et le niveau de tension VDD de la seconde borne de sortie 100 en fonction de la tension d'entrée U du signal électrique d'entrée 90 est identique à celui représenté sur la figure 5.

On remarquera qu'il est aussi possible, dans une variante de ce mode de réalisation, d'agencer les transistors 102 et 104 de telle manière que leurs sources respectives soient reliées à la seconde borne de sortie 100. Dans cette variante, il est prévu deux transistors à enrichissement MOS du type p-canal de telle manière que lorsque la tension U est positive, le transistor 104 est conducteur et lorsque cette tension U est négative, le transistor 102 est conducteur.

Le circuit d'application 88 comprend des moyens de lecture d'une information contenue dans le signal électrique d'entrée 90. Ces moyens de lecture comprennent un premier inverseur 120 et un second inverseur 122. Ces premier et second inverseurs 120 et 122 sont alimentés par la tension d'alimentation fournie entre la première borne de sortie 98 et la seconde borne de sortie 100.

L'entrée 124 du premier inverseur est reliée à la première borne d'entrée 92, alors que l'entrée 126 du second inverseur 122 est reliée à la seconde borne d'entrée 94. Chacun des deux inverseurs 120 et 122 est formé de deux transistors à enrichissement MOS. Le premier de ces deux transistors est un transistor n-canal dont la source 128 est reliée à la première borne de sortie 98 définissant un pôle négatif de la tension d'alimentation. Le second transistor est formé par un transistor p-canal dont la source 130 est reliée à la seconde borne de sortie 100 définissant le pôle positif de la tension d'alimentation.

La sortie 132 du premier inverseur 120, formée par un drain commun aux deux transistors formant cet inverseur 120, est reliée à une entrée A d'une unité de traitement 136. La sortie 134 du second inverseur 122 est reliée à une entrée B de cette unité de traitement 136.

Sur la figure 7 est représenté un dispositif de traitement de l'information binaire IA transmise à l'entrée A et de l'information binaire IB transmise à l'entrée B de l'unité de traitement 136.

Les informations binaires IA et IB, représentées sur la figure 8, sont fournies respectivement par le premier inverseur 120 et le second inverseur 122, ces informations IA et IB étant fonction du niveau de tension U du signal d'entrée 90 au cours du temps t.

On notera que lorsque la tension U du signal d'entrée 90 est nulle, les deux informations binaires IA et IB sont dans l'état logique "1". Lorsque la tension U du signal d'entrée a la valeur VA, l'information binaire IA est dans l'état logique "1" alors que l'information binaire IB est dans l'état logique "0". Par contre, lorsque la tension U du signal d'entrée 90 est égale à -UA, l'information binaire IB est égale à "1" et l'information binaire IA est égale à "0".

On notera ici que les moyens de lecture du système selon l'invention permettent de gérer un signal d'entrée 90 du type ternaire pour former deux informations binaires IA et IB. Les moyens de traitement de l'information appartenant à l'unité de traitement 136 et représentés sur la figure 7 comprennent une bascule RS 140 dont les deux entrées sont reliées aux entrées A et B de l'unité de traitement 136 et la sortie 142 est reliée à l'entrée ER d'un registre à décalage 144.

Le signal d'information IF transmis par la bascule RS 140 au registre à décalage 144 constitue l'information binaire transmise au circuit d'application par le signal d'entrée 90. Ce signal d'information IF fournit un élément d'information avec un état logique "0" lorsque la tension du signal d'entrée 90 prend la valeur UA et un élément d'information dans un état logique "1" lorsque la tension du signal d'entrée 90 a la valeur -UA.

Les moyens de traitement de l'information comportent également un élément électronique logique "AND" 146. Cet élément logique 146 a ses deux entrées reliées respectivement aux entrées A et B de l'unité de traitement 136. La sortie de cet élément logique 146 fournit un signal d'horloge IH présentant une fréquence dans le temps t qui est identique à celle du signal d'entrée. Ce signal d'horloge IH est fourni en particulier à une entrée CL du registre à décalage 144. Le signal IH forme une horloge interne au circuit d'application 88 et permet en particulier de gérer l'introduction des divers éléments d'information dans le registre à décalage 144.

Ainsi, on remarquera qu'à l'aide d'un seul signal d'entrée 90 judicieusement formé, il est possible de construire à l'aide de ce seul signal d'entrée 90 une horloge interne au circuit d'application. Dans le cas de la figure 8, le signal d'entrée judicieusement choisi est formé de divers éléments d'information 148 présentant soit un niveau de tension positif UA, soit un niveau de tension négatif -UA séparé les uns des autres par un niveau de tension nulle utilisé comme état dynamique du système de communication.

Chaque élément d'information 148 et l'état dynamique zéro qui le précède définissent un intervalle de temps constant. L'état dynamique zéro de l'information ternaire comprise dans le signal d'entrée 90 sert ainsi à la formation de l'horloge interne du circuit d'application du système selon l'invention.

On notera ici que dans un système équivalent au système décrit à la figure 6, il est possible de gérer une information digitalisée sur plusieurs niveaux de tension du signal d'entrée, en particulier sur un nombre de niveaux supérieur à trois. Le circuit d'interface selon l'invention rend possible un traitement fiable non seulement d'un signal digitalisé, mais aussi d'un signal analogique.

Finalement, on notera que le système décrit à la figure 6 comporte un transistor de modulation d'impédance 152 servant à la lecture d'informations comprises dans l'unité de traitement 136. Ce transistor 152 a sa source et son drain respectivement reliés aux première et seconde bornes d'entrée 92 et 94. La grille de ce transistor 152 est actionnée par l'unité de traitement 136, en particulier par un registre à décalage agencé dans cette unité de traitement 136. La lecture de l'information a déjà été décrite dans le cadre de la description de la figure 4.

## Revendications

1. Circuit d'interface, destiné à être relié électriquement d'une part à un bus bifilaire (58,60) et d'autre part à un circuit d'application (66; 88), comprenant un pont redresseur double-alternance (52) ayant une première borne d'entrée (54;92), une seconde borne d'entrée (56;94), une première borne de sortie (62;98) et une seconde borne de sortie (64:100), lesdites première et seconde bornes d'entrée étant destinées à être reliées respectivement à un premier fil (58) et à un second fil (60) dudit bus bifilaire, ce dernier étant susceptible de conduire un signal électrique d'alimentation (82;90) ayant une tension d'entrée (U) définie entre lesdites première et deuxième bornes d'entrée, une (92) desdites première et seconde bornes d'entrée définissant un point de référence externe, lesdites première et seconde bornes de sortie étant destinées à être reliées audit circuit d'application, une capacité d'alimentation (68;96) dudit circuit d'application étant prévue entre ces première et seconde bornes de sortie, cette capacité d'alimentation ayant entre lesdites première et seconde bornes de sortie une tension d'alimentation de polarité constante, une (98) desdites première et seconde bornes de sortie définissant un point de référence interne, ledit circuit d'application comprenant des moyens de lecture (80;120,122) d'une information en tension transmise à ce circuit d'application par un signal électrique de communication (82;90), lesdits moyens de lecture étant alimentés en tension par ladite tension d'alimentation et ledit signal électrique de communication ayant une tension déterminée relativement audit point de référence externe, ledit circuit d'interface étant caractérisé en ce qu'il comprend des moyens (70,72;102,104) pour définir une tension au moins quasi constamment déterminée entre ledit point de référence externe et ledit point de référence interne.

2. Circuit d'interface selon la revendication 1, caractérisé en ce que ledit pont redresseur est un pont à quatre diodes (D1,D2,D3,D4).

3. Circuit d'interface selon la revendication 1, caractérisé en ce que ledit signal électrique d'alimentation (82;90) et ledit signal électrique de communication (82;90) forment un seul et même signal électrique d'entrée (82:90) transmis par ledit bus bifilaire (58,60).

4. Circuit d'interface selon la revendication 1, caractérisé en ce que ladite première borne de sortie (62;98) définit un pôle négatif de ladite tension d'alimentation et en ce que lesdits moyens (70,72;102,104) pour définir une tension au moins quasi constamment déterminée entre ledit point de référence externe et ledit point de référence interne comprennent un premier interrupteur (70;102) et un second interrupteur (72;104), ledit premier interrupteur étant situé entre ladite première borne d'entrée (54;92) et ladite première borne de sortie (62;98) dudit pont redresseur, ledit second interrupteur étant situé entre ladite seconde borne d'entrée (56;94) et ladite première borne de sortie (62:98) de ce pont redresseur, ledit premier interrupteur étant conducteur seulement lorsque la polarité de ladite tension d'entrée (U) est positive, ledit second interrupteur étant conducteur seulement lorsque la polarité de ladite tension d'entrée (U) est négative.

5. Circuit d'interface selon la revendication 1, caractérisé en ce que ladite première borne de sortie (62;98) définit un pôle négatif de ladite tension d'alimentation et en ce que lesdits moyens (70,72;102,104) pour définir une tension au moins quasi constamment déterminée entre ledit point de référence externe et ledit point de référence interne comprennent un premier interrupteur (70;102) et un second interrupteur (72;104), ledit premier interrupteur étant situé entre ladite première borne d'entrée (54;92) et ladite seconde borne de sortie (64;100) dudit pont redresseur, ledit second interrupteur étant situé entre ladite seconde borne d'entrée (56;94) et ladite seconde borne de sortie (64;100) de ce pont redresseur, ledit premier interrupteur étant conducteur seulement lorsque la polarité de ladite tension d'entrée (U) est négative, ledit second interrupteur étant conducteur seulement lorsque la polarité de ladite tension d'entrée (U) est positive.

6. Circuit d'interface selon la revendication 4 ou 5, caractérisé en ce que lesdits premier et second interrupteurs (70,72;102,104) sont respectivement formés par un premier transistor MOS (102) et un second transistor MOS (104), la grille (110) du premier transistor MOS et la grille (116) du second transistor MOS étant respectivement reliées auxdites seconde et première bornes d'entrée (94 et 92).

7. Circuit d'interface selon l'une quelconque des revendications 1 à 6, caractérisé en ce que lesdites première et seconde bornes d'entrée (54,56;92,94) sont reliées respectivement à la source et au drain d'un transistor de modulation d' impédance (152), la grille de ce transistor de modulation d'impédance étant actionnée par ledit circuit d'application (88) de manière à transmettre une information binaire de sortie.
